# EUROPEAN PATENT SPECIFICATION

(11) **EP 3 355 645 B1**
(45) Date of publication and mention of the grant of the patent: **26.06.2024**
(21) Application number: 16847912.9
(22) Date of filing: 05.08.2016
(51) Int. Cl.: H04W 74/00, H04B 7/0452, H04L 5/00

(54) **DATA TRANSMISSION METHOD AND NODE**
DATENÜBERTRAGUNGSVERFAHREN UND KNOTEN
NOEUD ET PROCÉDÉ DE TRANSMISSION DE DONNÉES

(30) Priority: 25.09.2015 CN 201510623590
(43) Date of publication of application: 01.08.2018
(60) Divisional application: 24173265.0
(73) Proprietor: ZTE Corporation, Shenzhen, Guangdong 518057 (CN)
(72) Inventor: XING, Weimin, Shenzhen Guangdong 518057 (CN); YAO, Ke, Shenzhen Guangdong 518057 (CN); LV, Kaiying, Shenzhen Guangdong 518057 (CN); TIAN, Kaibo, Shenzhen Guangdong 518057 (CN)
(74) Representative: Vossius & Partner Patentanwälte Rechtsanwälte mbB
(86) International application number: PCT/CN2016/093632
(87) International publication number: WO 2017/050030

(56) References cited:
- WO-A1-2015/066449
- WO-A1-2015/074461
- CN-A- 1 929 470
- CN-A- 102 057 642
- CN-A- 104 113 364
- US-A1- 2012 051 454
- US-A1- 2015 110 046
- ROBERT STACEY (INTEL): "Spec Framework ; 11-15-0132-09-00ax-spec-framework", IEEE DRAFT; 11-15-0132-09-00AX-SPEC-FRAMEWORK, IEEE-SA MENTOR, PISCATAWAY, NJ USA, vol. 802.11ax, no. 9, 22 September 2015 (2015-09-22), pages 1-22, XP068097995, [retrieved on 2015-09-22]

## Description

### TECHNICAL FIELD

The present disclosure relates to, but not limited to, the radio communication technologies, in particular, to data transmission methods and nodes.

### BACKGROUND

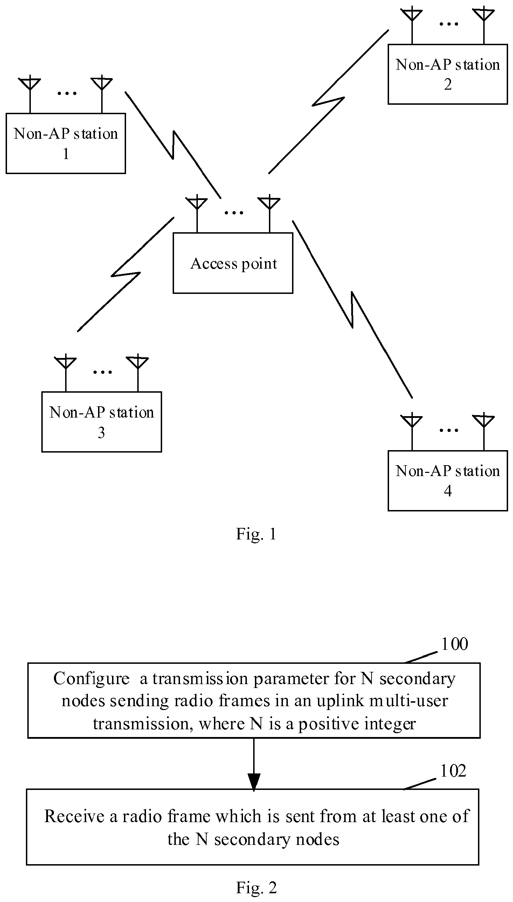

A basic service set (BSS) of a Wireless Local Area Network (WLAN) is generally as shown in FIG. 1 and generally includes an access point (AP) and some non-AP stations (non-AP STA) associated with the AP. Currently, the Institute of Electrical and Electronics Engineers (IEEE) standards organization has introduced a parallel multi-user data transmission technology to solve the problem of WLAN network efficiency, and this has caused widespread concerns and researches. In the WLAN, the parallel multi-user data transmission is generally as follows. Multiple secondary nodes simultaneously send data to a main node (uplink), or the main node simultaneously sends data to the multiple secondary nodes (downlink). Generally, the main node is an AP or a non-AP STA having a special capability, and the secondary nodes are generally non-AP STAs. The parallel transmission technologies include Multi-User Multiple Input Multiple Output (MU-MIMO), Orthogonal Frequency Division Multiple Access (OFDMA). Currently, for the uplink multi-user transmission, the AP is responsible for triggering, and all uplink multi-user radio frames are immediately after the trigger frame or trigger information sent by the AP.

The WLAN uses random contention to send data, which is generally an asynchronous non-scheduled system. Therefore, in order for the receiver to receive data correctly, a preamble or a physical layer frame header is generally carried in front of the data payload to be transmitted to assist reception. The training sequence in the preamble can be used to realize functions such as synchronization, automatic gain control, and channel estimation; a signaling field (SIG) in the preamble can be used to obtain the data length, modulation and coding scheme (MCS) of the data transmission, number of streams, and delivery method, and so on. With the development of wireless LAN technologies, the next-generation WLAN technology standard, High Efficiency WLAN (HEW), introduces a number of new technologies, such as the multi-user transmission technology, Dual Carrier/Sub-Carrier/Tone Modulation (DCM). The introduction of these new technologies, especially the uplink multi-user transmission technology, makes the HEW radio frame's preamble design more complex and also imposes more requirements on the preamble, such as the requirement for extended coverage and reliability, and so on.

For the uplink multi-user transmission, there is the following problem with the related technical solutions that need to be solved: the uplink multi-user transmission preamble needs to ensure that the AP which triggers the current uplink multi-user transmission and the third-party station can correctly interpret the signaling field in the received preamble.

Patent document US 2015/110046 relates to wireless communications, and more particularly, to methods and apparatus for channel state information feedback.

Patent documents US2012051454 relates to communication systems; and, more particularly, it relates to phase rotation for preambles within multiple user, multiple access, and/or MIMO wireless communications.

Non-patent literature by Robert Stacey (INTEL): "Spec Framework; 11-15-0132-09-00ax-spec-framework", IEEE DRAFT, vol. 802.11ax, no. 9, 22 September 2015, pages 1-22, provides the framework from which the draft TGax amendment is to be developed. The document provides an outline of each functional block.

WO 2015/074461 A1 relates to a high-efficiency WLAN (HEW) master station and method for communicating in a Wireless Network.

### SUMMARY

The present invention relates to data transmission methods and nodes, according to the appended claims.

The following is a summary of subject matters of the present disclosure. This summary is not intended to limit the scope of protection of the claims.

Embodiments of the present disclosure provide a data transmission method and a node, which can ensure that the common preambles of an uplink multi-user transmission are uniform, and thereby ensure that an AP which triggers the current uplink multi-user transmission and third-party stations can correctly interpret the signaling field in the received preambles.

An embodiment of the present disclosure provides a data transmission method as defined by independent claim 1.

According to an exemplary embodiment, configuring at least one transmission parameter for N secondary nodes sending radio frames in an uplink multi-user transmission, includes: sending at least one trigger frame or trigger information to the secondary nodes, wherein the trigger frame or trigger information carries an information field which indicates the transmission parameter when the secondary nodes send the radio frames.

According to an exemplary embodiment, configuring at least one transmission parameter for N secondary nodes sending radio frames in an uplink multi-user transmission, includes: sending at least one trigger frame or trigger information to the secondary nodes, wherein a sending manner of the trigger frame or the trigger information impliedly indicates the transmission parameter when the secondary nodes send the radio frames.

According to an exemplary embodiment, impliedly indicating the transmission parameter when the secondary nodes send the radio frames includes: configuring the transmission parameter for the secondary nodes sending the radio frames by using a transmission parameter of a radio frame which the trigger frame or the trigger information resides in. According to an exemplary embodiment, configuring at least one transmission parameter for N secondary nodes sending radio frames in an uplink multi-user transmission, includes: sending a unicast or multicast management frame, wherein the management frame carries an information field indicating the transmission parameter when the secondary nodes send the radio frames.

According to an exemplary embodiment, configuring at least one transmission parameter for N secondary nodes sending radio frames in an uplink multi-user transmission, includes: according to a configuration predefined by a protocol, setting the transmission parameter when the secondary nodes send the radio frames.

According to an exemplary embodiment, repetition modes of preset signaling fields of the secondary nodes are configured as the same; each of the repetition modes of the present signaling fields refers to at least one of: whether the preset signaling field is sent repeatedly; an interleaving parameter when the preset signaling field is sent repeatedly, a code when the preset signaling field is sent repeatedly, and the number of repetitions of the preset signaling field.

According to an exemplary embodiment, transmission modes of the N secondary nodes are a mode in which indication information uniformly indicates the same mode; or the transmission modes of the N secondary nodes are indicated respectively with corresponding N pieces of indication information, these N pieces of indication information indicate the same or different modes.

According to an exemplary embodiment, receiving at least one radio frame which is sent from at least one of the N secondary nodes, includes: receiving radio frames which are sent by the secondary nodes in parallel;
receiving radio frames which are sent by the secondary nodes in parallel, includes:
if it is determined that a radio frame to be received is a response frame which is used for responding to at least one trigger frame or trigger information, skipping detection or decoding of a part or whole of common preambles sent by the secondary nodes, and decoding a data payload according to a preset parameter; wherein the preset parameter is a parameter which is carried in the trigger frame or the trigger information.

According to an exemplary embodiment, receiving at least one radio frame which is sent from at least one of the N secondary nodes, includes: receiving radio frames which are sent by the secondary nodes in parallel;
receiving radio frames which are sent by the secondary nodes in parallel, includes:
if it is determined that a radio frame to be received is a response frame which is used for responding to at least one trigger frame or trigger information and there is an error in detection or decoding of a part or whole of common preambles sent by the secondary nodes, ignoring the error and decoding a data payload according to a preset parameter; wherein the preset parameter is a parameter which is carried in the trigger frame or the trigger information.

According to an exemplary embodiment, the common preamble includes: a legacy short training field (L-STF), a legacy long training field (L-LTF), a legacy signaling field (L-SIG), a repeated L-SIG, and the preset signaling field.

According to an exemplary embodiment, if the preset signaling field is sent repeatedly, the common preamble further includes the repeated preset signaling field.

According to an exemplary embodiment, receiving at least one radio frame which is sent from at least one of the N secondary nodes, includes: receiving radio frames which are sent by the secondary nodes in parallel;
receiving radio frames which are sent by the secondary nodes in parallel, includes:
detecting preambles on all sub-channels, and if the preamble on at least one sub-channel exceeds a threshold value, starting to receive data payloads sent from the secondary nodes.

An embodiment of the present disclosure provides a node as defined by independent claim 9.

According to an exemplary embodiment, the configuration unit is configured to:
send at least one trigger frame or trigger information to the secondary nodes, wherein the trigger frame or trigger information carries an information field which indicates the transmission parameter when the secondary nodes send the radio frames.

According to an exemplary embodiment, the configuration unit is configured to:
send at least one trigger frame or trigger information to the secondary nodes, wherein a sending manner of the trigger frame or the trigger information impliedly indicates the transmission parameter when the secondary nodes send the radio frames.

According to an exemplary embodiment, the impliedly indicating the transmission parameter when the secondary nodes send the radio frames includes: configuring the transmission parameter when the secondary nodes send the radio frames by using a transmission parameter of a radio frame which the trigger frame or the trigger information resides in. According to an exemplary embodiment, the configuration unit is configured to:
send a unicast or multicast management frame, wherein the management frame carries an information field indicating the transmission parameter when the secondary nodes send the radio frames.

According to an exemplary embodiment, the configuration unit is configured to:
according to a configuration predefined by a protocol, set the transmission parameter when the secondary nodes send the radio frames.

According to an exemplary embodiment, repetition modes of preset signaling fields of the secondary nodes are configured as the same; each of the repetition modes of the present signaling fields refers to at least one of: whether the preset signaling field is sent repeatedly; an interleaving parameter when the preset signaling field is sent repeatedly, a code when the preset signaling field is sent repeatedly, and the number of repetitions of the preset signaling field.

According to an exemplary embodiment, transmission modes of the N secondary nodes are a mode in which indication information uniformly indicates the same mode; or the transmission modes of the N secondary nodes are indicated respectively with corresponding N pieces of indication information, these N pieces of indication information indicate the same or different modes.

According to an exemplary embodiment, the receiving unit is configured to:
if it is determined that a radio frame to be received is a response frame which is used for responding to at least one trigger frame or trigger information, skip detection or decoding of a part or whole of common preambles sent by the secondary nodes, and decode a data payload according to a preset parameter; wherein the preset parameter is a parameter which is carried in the trigger frame or the trigger information.

According to an exemplary embodiment, the receiving unit is configured to:
if it is determined that a radio frame to be received is a response frame which is used for responding to at least one trigger frame or trigger information and there is an error in detection or decoding of a part or whole of common preambles sent by the secondary nodes, ignore the error and decoding a data payload according to a preset parameter; wherein the preset parameter is a parameter which is carried in the trigger frame or the trigger information.

According to an exemplary embodiment, the common preamble sent from the secondary nodes includes: a legacy short training field (L-STF), a legacy long training field (L-LTF), a legacy signaling field (L-SIG), a repeated L-SIG, and the preset signaling field.

According to an exemplary embodiment, if the preset signaling field is sent repeatedly, the common preamble further includes the repeated preset signaling field.

According to an exemplary embodiment, the receiving unit is configured to:
detect preambles on all sub-channels, and if the preamble on at least one sub-channel exceeds a threshold value, start to receive data payloads sent from the secondary nodes.

In the data transmission methods and devices provided by embodiments of the present disclosure, a main node configures at least one transmission parameter for N secondary nodes sending radio frames in an uplink multi-user transmission, where N is a positive integer. The transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; wherein the transmission mode includes a normal transmission mode or a Dual Carrier Modulation (DCM) transmission mode. Then the main node receives at least one radio frame which is sent from at least one of the N secondary nodes. In the technical solutions provided by embodiments of the present disclosure, the main node controls, by indication, the signaling field sent by the secondary nodes for an uplink transmission and the transmission parameter of other preambles, and this can ensure that the common preambles of individual secondary nodes for an uplink multi-user transmission are uniform, and thereby can ensure that the main node and listening nodes can correctly receive and interpret the common preambles. Further, if the main node determines the current transmission is an uplink multi-user transmission, if the detection or decoding of the preamble signaling is wrong, data receipt can still be conducted. Thus, the probability of success for uplink multi-user transmissions is increased and thus utilization efficiency of the networks is improved.

Additional features and advantages of the present disclosure will be set forth in the following description, and will be apparent from the description in part, or by way of implementation of the present disclosure. The objectives and other advantages of the disclosure may be realized and attained by the description and claims and the structures particularly pointed out in drawings.

### BRIEF DESCRIPTION OF THE DRAWINGS

The accompanying drawings are used to provide a further understanding of the technical solutions of the present disclosure, and constitute a part of the description. Together with the embodiments of the present disclosure, the drawings are used to explain the technical solutions of the present application, and do not constitute limitations on the technical solutions of the present disclosure.
Fig. 1 is a schematic diagram showing a structure of a Basic Service Set (BSS) of a WLAN.
Fig. 2 is a flow chart showing a data transmission method according to an embodiment of the present disclosure.
Fig. 3 is a flow chart showing a data transmission method according to an embodiment of the present disclosure.
Fig. 4 is a schematic diagram showing an uplink multi-user transmission performed by STA1 to STA4 according to an embodiment of the present disclosure.
Fig. 5 is a block diagram showing a node according to an embodiment of the present disclosure.
Fig. 6 is a block diagram showing a node according to an embodiment of the present disclosure.

### DETAILED DESCRIPTION

Hereinafter, embodiments of the present disclosure will be described in detail with reference to the accompanying drawings. It should be noted that the embodiments in the present disclosure and the features in the embodiments can be combined with each other arbitrarily if the embodiments or features do not conflict with each other.

The steps illustrated in the flow charts in the drawings may be performed in a computer system which has for example a set of computer-executable instructions. Also, although a logical order is shown in the flow charts, in some cases, the steps described herein may be performed in an order other than this the illustrated or described order(s).

An embodiment of the present disclosure provides a data transmission method, which is performed at a main node side. As shown in Fig. 2, the method may include the following steps.

In step 100, at least one transmission parameter for N secondary nodes sending radio frames in an uplink multi-user transmission is configured, where N is a positive integer.

The transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; wherein the transmission mode includes a normal transmission mode or a Dual Carrier Modulation (DCM) transmission mode.

In step 102, at least one radio frame which is sent from at least one of the N secondary nodes is received.

According to an exemplary embodiment, step 100 may include: sending at least one trigger frame or trigger information to the secondary nodes, wherein the trigger frame or trigger information carries an information field which indicates the transmission parameter when the secondary nodes send the radio frames.

It should be noted that the trigger frame is a frame in which an independent frame type is set as at least one trigger frame, and trigger information is filled in a payload portion of the trigger frame. Further, the trigger information may be packaged into a Media Access Control (MAC) layer frame header or a payload of a frame of other types.

According to an exemplary embodiment, step 100 may include sending at least one trigger frame or trigger information to the secondary nodes, wherein a sending manner of the trigger frame or the trigger information impliedly indicates the transmission parameter when the secondary nodes send the radio frames.

The impliedly indicating the transmission parameter when the secondary nodes send the radio frames may refer to: configuring the transmission parameter when the secondary nodes send the radio frames by using a transmission parameter of a radio frame which the trigger frame or the trigger information resides in.

According to an exemplary embodiment, step 100 may include sending a unicast or multicast management frame. The management frame carries an information field indicating the transmission parameter when the secondary nodes send the radio frames.

According to an exemplary embodiment, step 100 may include: according to a configuration predefined by a protocol, setting the transmission parameter when the secondary nodes send the radio frames.

According to an exemplary embodiment, repetition modes of preset signaling fields of the secondary nodes are configured as the same; each of the repetition modes of the present signaling fields refers to at least one of: whether the preset signaling field is sent repeatedly; an interleaving parameter when the preset signaling field is sent repeatedly, a code when the preset signaling field is sent repeatedly, and the number of repetitions of the preset signaling field.

According to an exemplary embodiment, transmission modes of the N secondary nodes are a mode in which indication information uniformly indicates the same mode; or the transmission modes of the N secondary nodes are indicated respectively with corresponding N pieces of indication information, these N pieces of indication information indicate the same or different modes.

It should be noted that if the transmission modes of the N secondary nodes are the same, uniform setting may be used. In this way, only one information field or one bit is needed. If the transmission modes of the N secondary nodes are different, one bit is needed for one secondary node, and the bit corresponding to each secondary is the same as the mode indication bit. Also, it should be noted that the above two implementations require different designs of the trigger frame.

According to an exemplary embodiment, step 102 may include: if it is determined that a radio frame to be received is a response frame which is used for responding to at least one trigger frame or trigger information, skipping detection or decoding of a part or whole of common preambles sent by the secondary nodes, and decoding a data payload according to a preset parameter; wherein the preset parameter is a parameter which is carried in the trigger frame or the trigger information.

According to an exemplary embodiment, step 102 may include: if it is determined that a radio frame to be received is a response frame which is used for responding to at least one trigger frame or trigger information and there is an error in detection or decoding of a part or whole of common preambles sent by the secondary nodes, ignoring the error and decoding a data payload according to a preset parameter; wherein the preset parameter is a parameter which is carried in the trigger frame or the trigger information.

It should be noted that as compared with related technical solutions in which only if the detection or decoding of all the preambles sent by the secondary nodes is correct, the main node will continue to decode the data payload, the technical solutions provided by embodiments of the present disclosure can optimize the procedure when the main node receives the uplink radio frames based on the trigger frame, thereby avoiding unnecessary loss of packets.

According to an exemplary embodiment, the common preamble includes: a legacy short training field (L-STF), a legacy long training field (L-LTF), a legacy signaling field (L-SIG), a repeated L-SIG, and the preset signaling field.

According to an exemplary embodiment, if the preset signaling field is sent repeatedly, the common preamble further includes the repeated preset signaling field.

According to an exemplary embodiment, step 102 may include: detecting preambles on all sub-channels, and if the preamble on at least one sub-channel exceeds a threshold value, starting to receive data payloads sent from the secondary nodes. The at least one sub-channel may be a main channel or a secondary channel.

In the data transmission method provided by embodiments of the present disclosure, a main node configures at least one transmission parameter for N secondary nodes sending radio frames in an uplink multi-user transmission, where N is a positive integer. The transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; wherein the transmission mode includes a normal transmission mode or a Dual Carrier Modulation (DCM) transmission mode. Then the main node receives at least one radio frame which is sent from at least one of the N secondary nodes. In the technical solutions provided by embodiments of the present disclosure, the main node controls, by indication, the signaling field sent by the secondary nodes for an uplink transmission and the transmission parameter of other preambles, and this can ensure that the common preambles of individual secondary nodes for an uplink multi-user transmission are uniform, and thereby can ensure that the main node and listening nodes can correctly receive and interpret the common preambles. Further, if the main node determines the current transmission is an uplink multi-user transmission, if the detection or decoding of the preamble signaling is wrong, data receipt can still be conducted. Thus, the probability of success for uplink multi-user transmissions is increased and thus utilization efficiency of the networks is improved.

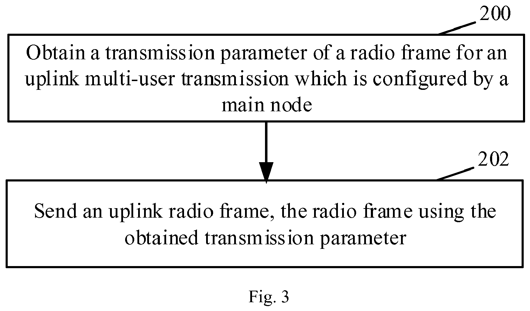

An embodiment of the present disclosure provides a data transmission method, which is performed at a second node side. As shown in Fig. 3, the method may include the following steps.

In step 200, at least one transmission parameter of a radio frame for an uplink multi-user transmission which is configured by a main node is obtained.

The transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; wherein the transmission mode includes a normal transmission mode or a Dual **Carrier** Modulation (DCM) transmission mode.

In step 202, an uplink radio frame is sent. The radio frame uses the obtained transmission parameter.

According to an exemplary embodiment, step 200 may include: determining the transmission parameter of the radio frame for the uplink multi-user transmission according to at least one of the following manners:
receiving at least one trigger frame or trigger information sent from the main node, and determining the transmission parameter of the radio frame for the uplink multi-user according to information field carried in the trigger frame or trigger information which indicates the transmission parameter of the radio frame for the uplink multi-user transmission;
receiving at least one trigger frame or trigger information sent from the main node, and determining the transmission parameter of the radio frame for the uplink multi-user according to a transmission parameter of the radio frame which is used when the trigger frame or the trigger information is sent; and
receiving a unicast or multicast management frame sent from the main node, and determining the transmission parameter of the radio frame for the uplink multi-user according to an information field carried in the management frame which indicates the transmission parameter of the radio frame for the uplink multi-user transmission; and
determining the transmission parameter of the radio frame for the uplink multi-user according to a configuration predefined by a protocol.

According to an exemplary embodiment, step 202 may include:
sending a common preamble by using the phase rotation mode of the sub-channel of the common preamble and/or the cyclic shift diversity parameter of the space-time stream/transmission chain of the common preamble.

According to an exemplary embodiment, step 202 may include: sending a data payload by using the transmission mode configured by the main node.

According to an embodiment, before step 202, the method may further include:
In step 201, according to the obtained repetition mode of the preset signaling field, the repetition mode of the preset signaling field in the radio frame is indicated in a training sequence or a signaling field before the preset signaling field.

In the data transmission method provided by embodiments of the present disclosure, a secondary node obtains at least one transmission parameter of a radio frame for an uplink multi-user transmission which is configured by a main node. The transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; wherein the transmission mode includes a normal transmission mode or a Dual **Carrier** Modulation (DCM) transmission mode. Then, the secondary node sends an uplink radio frame, and the radio frame uses the obtained transmission parameter. Then the main node receives at least one radio frame which is sent from at least one of the N secondary nodes. In the technical solutions provided by embodiments of the present disclosure, the main node controls, by indication, the signaling field sent by the secondary nodes for an uplink transmission and the transmission parameter of other preambles, and this can ensure that the common preambles of individual secondary nodes for an uplink multi-user transmission are uniform, and thereby can ensure that the main node and listening nodes can correctly receive and interpret the common preambles. Further, if the main node determines the current transmission is an uplink multi-user transmission, if the detection or decoding of the preamble signaling is wrong, data receipt can still be conducted. Thus, the probability of success for uplink multi-user transmissions is increased and thus utilization efficiency of the networks is improved.

The technical solutions of the present disclosure will be described below in detail by specific embodiments.

### First Embodiment

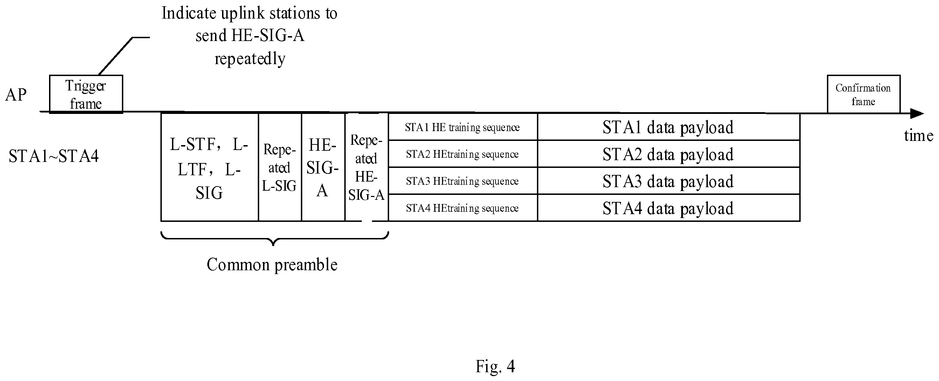

As shown in Fig. 1, an AP that supports uplink multi-user transmission establishes a BSS. Multiple non-AP STAs perform association authentication with the AP to form a BSS. In this embodiment and subsequent embodiments, the preset signaling field is assumed to be a high efficiency signaling A (HE-SIG-A). In this embodiment, an uplink multi-user transmission process is shown in Fig. 4. In order to ensure that uplink multi-user transmissions do not interfere with each other and are synchronized, the WLAN requires that all uplink multi-user transmissions are triggered by the AP. This embodiment will be described as follows:
The AP competes for resource to send at least one trigger frame and request the STA1 to STA4 to use the UL (Upload) OFDMA method to send the uplink radio frames. In addition to indication of transmission parameters such as the uplink frequency band resources allocated to the STA1 to STA4, MCS, the number of streams and transmission duration in the trigger frame, the trigger frame also indicates whether the uplink multi-user transmission repeatedly transmits the HE-SIG-A. In this embodiment, it is assumed that it is indicated that HE-SIG-A is repeatedly transmitted. Whether all the stations participating in the uplink transmission repeatedly send the HE-SIG-A is indicated in a common information field in the trigger frame, thereby ensure that the repetition modes of all stations are the same.

STA1 to STA4 receive the trigger frame sent by the AP and find that they are scheduled to perform uplink multiuser transmission. Assuming that STA1 to STA4 determine that the transmission can be performed, STA1 to STA4 send uplink radio frames according to the AP-indicated transmission parameters on the resources indicated by the AP. The structure of the uplink radio frame is as shown in Fig. 4. The radio frame includes a preamble and a data payload. The preamble includes a common preamble and a specific preamble associated with each sending station. The specific preamble is mainly a high efficiency training field sent by a corresponding sending station, including a high efficiency short training field (HE-STF) and a high efficiency long training field (HE-LTF).

STA1 to STA4 send HE-SIG-A according to the indication in the trigger frame of whether HE-SIG-A is repeatedly sent as indicated by the AP. In this embodiment, the AP indicates repeat transmission, and then all the uplink stations repeatedly send HE-SIG-A. All stations send a common preamble, in which the legacy short training field (L-STF), the legacy long training field (L-LTF), the legacy signaling field (L-SIG), the repeated L-SIG, the HE-SIG-A, and the HE-SIG-A that is required by the AP to be sent are sent. In addition, it is indicated in the legacy preamble portion (including L-STF, L-LTF, L-SIG, and repeated L-SIG) before the transmitted HE-SIG-A whether the current uplink radio frame transmission repeats HE-SIG-A. For example, it is possible to explicitly or implicitly indicate whether the current uplink radio frame transmission repeats HE-SIG-A by using L-SIG, information bits in the repeated L-SIG, changes in modulation and coding, characteristics of interleaved sequences, phase transformation, and the like..

In addition, for the structure of the uplink radio frame, the above-mentioned common preamble refers to a preamble that all uplink stations have to transmit and may overlap with each other. The preamble transmitted by different stations has the same content, and the transmission bandwidth of the preamble is an integral multiple of a basic bandwidth. For example, it is an integer multiple of 20 MHz bandwidth. For example, although STA1 to STA4 transmit data using only a part of 20 MHz, four stations transmit a common preamble at the same 20 MHz. This co-sending and consistent preamble can help a listening station to detect the channel, and also allow the AP to better receive uplink multi-user data. The specific preamble sent based on each sending station and the data payload sent by the uplink sending station use the bandwidth and resource allocated to the sending station itself. The specific preamble is used to assist the AP to receive the subsequent data payload.

### Second Embodiment

In this embodiment, the method for indicating whether the HE-SIG-A is repeatedly sent by multiple uplink stations in the process of controlling the uplink multi-user transmission by the AP is described.

Method 1: As described in the first embodiment, before each uplink multi-user transmission, the AP sends at least one trigger frame to multiple uplink stations, and an information field in the trigger frame is used to explicitly indicate the repetition mode for the multiple uplink stations to send the HE-SIG-A.

Method 2: The feature of the transmission of the trigger frame itself is used to implicitly indicate the repetition mode for the multiple uplink stations to send the HE-SIG-A. For example, if the HE-SIG-A in the radio frame where the trigger frame itself is located is repeated, the HE-SIG-A transmitted by multiple uplink stations triggered by the trigger frame is also required to be repeated.

Method 3: The AP indicates the repetition mode of the HE-SIG-A for the uplink multi-user transmission in a transmitted unicast or multicast management frame. For example, the AP indicates whether receiving stations repeats HE-SIG-A during uplink multi-user transmission in an association response, a probe response or other unicast management frame which is sent to the stations. Or, the AP notifies the stations of whether the HE-SIG-A is repeated for the uplink multi-user transmission in a transmitted Beacon frame or other broadcast multicast frame. In this way, when the stations send uplink radio frames upon trigger of the AP, HE-SIG-A is transmitted according to the repetition mode set in the latest received unicast or multicast management frame.

Method 4: Whether a station repeatedly sends the HE-SIG-A when an uplink multi-user transmission is conducted is set from a protocol level.

In addition, the repetition mode of the signaling field A includes at least one of the following information:
whether HE-SIG-A is sent repeatedly; an interleaving parameter when HE-SIG-A is sent repeatedly, a code when the HE-SIG-A is sent repeatedly, and the number of repetitions of the HE-SIG-A.

### Third Embodiment

In the uplink multi-user transmission, the common preambles of multiple uplink stations overlap each other on the same 20 MHz, and the common preambles sent by these stations are the same. If the total transmission bandwidth is an integral multiple of 20 MHz, contents of multiple 20 MHzs are also the same. The superposition of multiple 20MHz common preambles at multiple stations at the AP side may cause the Peak to Average Power Ratio (PAPR) to be too large, which may cause the receiver's energy efficiency to decrease. In addition, at the same 20MHz, although the common preamble of multiple users has the same content, due to the effects of multiple antennas and multiple stations, unexpected beam-forming may be caused, and the AP cannot receive the aliased signal. In order to reduce PAPR or avoid unwanted beam-forming, an example of a method designed according to an embodiment of the present invention is as follows:
As shown in Fig. 1, an AP that supports uplink multi-user transmission establishes a BSS. Multiple non-AP STAs perform association authentication with the AP to form a BSS. The uplink multi-user transmission process in this embodiment is also shown in Fig. 4. To ensure that the uplink multi-user transmissions do not interfere with each other and are synchronized, the WLAN requires that all uplink multi-user transmissions are triggered by the AP. This embodiment is described as follows:

The AP competes for resource to send at least one trigger frame and requires the STA1 to STA4 to use the UL OFDMA manner to send the uplink radio frames. In addition to indication of transmission parameters in the trigger frame, such as the uplink frequency band resources allocated to the STA1 to STA4, the MCS, the number of streams, and the transmission duration, the trigger frame also indicates whether uplink multi-user transmission repeatedly transmits HE-SIG-A. It is assumed in this embodiment that HE-SIG-A is repeatedly transmitted. In order to reduce PAPR or avoid unwanted beam-forming, the uplink station can choose the following rules to operate as required:
Rule 1: In order to reduce the PAPR at the receiver AP, the uplink station acquires the allocated uplink resources and total bandwidth, determines which one or more 20 MHz channels it belongs to, and determines the position of the one or more 20 MHz in the total bandwidth allocated by the AP, rotate all or part of the common preamble to be sent according to the relative position. For example, the total bandwidth of uplink multi-user transmission scheduled by the AP is 80 MHz, and the resource used by STA1 is on the third 20 MHz. According to a predefined rule, for example, the first 20 MHz is not rotated, the second MHz is rotated by 90 degrees, and the third MHz is rotated by 180 degrees, and so on. It is assumed that the common preamble sent by STA1 is rotated by 180 degrees. In addition, the rotation parameter may be used to send other parts of the radio frame besides sending a common preamble. Although sending other parts has no effect on the PAPR, it can ensure that the entire radio frame uses the same rotation, which is beneficial to implementation.
Rule 2: In order to avoid unnecessary beam-forming at the AP side, the uplink station acquires the allocated uplink resources and total bandwidth, determines which one or more 20 MHz channels it belongs to, and determines the number of data streams or the number of antennas that the station uses. Then, a Cyclic Delay Diversity (CSD) is added to each data stream or the content that is sent by each antenna. The description of data stream/antenna and the like is equivalent to the description of the transmission chain/space-time flow and the like. The station can select the value of CSD according to the parameters such as the total number of users and the number of antennas on the same 20MHz.

In addition to the above method of determining the phase rotation mode of sub-channels by which multiple secondary nodes in the uplink multi-user send a common preamble and/or the cyclic shift diversity parameter, the following methods may also be used:
Method 1: Before each uplink multi-user transmission, the AP sends at least one trigger frame to the uplink station, and uses an information field in the trigger frame to explicitly indicate the phase rotation mode of sub-channels by which multiple secondary nodes in the uplink multi-user send a common preamble and/or the cyclic shift diversity parameter of the transmission chain of the common preamble or the space-time stream.
Method 2: The feature of the transmission of the trigger frame itself is used to impliedly indicate the phase rotation mode of sub-channels by which the common preamble is sent and/or the cyclic shift diversity parameter of a space-time stream/transmission chain of the common preamble. For example, corresponding to the phase rotation mode of sub-channels by which the common preamble is sent and/or the cyclic shift diversity parameter of the space-time stream/transmission chain of a common preamble in the radio frames transmitted by the multiple uplink stations which are triggered by the trigger frame, the phase rotation mode of sub-channels by which the common preamble is sent and/or the cyclic shift diversity parameter of the space-time stream/transmission chain of the common preamble under the situation that the HE-SIG-A in the radio frame where the trigger frame is located in is required to be repeated is used.
Method 3: The AP indicates the phase rotation mode of sub-channels by which the common preamble is sent and/or the cyclic shift diversity parameter of the space-time stream/transmission chain of the common preamble in a transmitted unicast or multicast management frame.

### Fourth Embodiment

To ensure the probability of success of uplink multi-user transmission, it is stipulated that after the AP sends at least one trigger frame or trigger information to multiple uplink stations, if the uplink data sent by at least one user is successfully received, it is considered that the uplink multi-user transmission process is successful even if the uplink multi-user transmission does not include the main channel. The main channel is a 20 MHz channel defined by the WLAN BSS when using large bandwidth transmission. The channel busy detection and backoff procedures are based on the main channel, and the general competed transmission of data also uses the main channel. However, there may be no signal on the main channel when AP-triggered multi-user transmission is conducted. Therefore, in order to enable the AP to receive uplink data, a preamble detection and reception method based on an uplink multi-user transmission is provided in this embodiment. The embodiment is described as follows:
The AP competes for resources to send at least one trigger frame and requires the STA1 to STA4 to use the UL OFDMA manner to send the uplink radio frames. The total bandwidth is 40 MHz. It is assumed that the STA1 occupies the main 20 MHz channel and the STA2 to STA4 occupy the secondary 20 MHz channel. Then, the AP waits for a response from the stations. The channels for detecting the preamble is not only the main 20 MHz channel, but all assigned 20 MHz channels. This can avoid that only detecting the main 20 MHz channel results in it is unable to start the receiving process and thereby missing the STA2 to STA4 data. In order to save detection energy, the AP uses this large-bandwidth preamble detection method after a certain time period when the trigger frame is transmitted.

### Fifth Embodiment

In the process of successful uplink multi-user transmission, all transmissions are initiated by the AP sending the trigger frame or trigger information trigger, and the trigger frame or trigger information carries the parameters of the uplink data frame sent by stations to ensure synchronization. Actually, the common preamble sent by stations for a multi-user transmission is known to the AP. However, according to currently related radio frame detection methods and logic, only if the preamble is correctly received, particularly the common preamble, receiving of subsequent data payload can be continued, and it is considered that the data may be received correctly. According to this method, the right or wrong receiving of the common preamble may affect the receiving of subsequent data, and thereby theoretically increase the error rate of data reception. Therefore, a preamble detection and reception method based on an uplink multi-user transmission is provided in this embodiment. This embodiment is described as follows:
The AP competes for resources to send at least one trigger frame and requires the STA1 to STA4 to use the UL OFDMA manner to send the uplink radio frames. The total bandwidth is 40 MHz. It is assume that the STA1 occupies the main 20 MHz channel and the STA2 to STA4 occupy the secondary 20 MHz channel. Then, the AP waits for the response from the stations in the short inter-frame space (SIFS) after the trigger frame. Assuming that the radio frame transmission is indeed detected at the determined time point, the AP may determine that the station indeed makes response, and the AP may ignore or skip the detection and decoding of some or all of the common preambles (in particular, the legacy signaling field and the HE-SIG-A therein) and directly start the reception of the subsequent data payload and the HE training sequence field corresponding to the subsequent data payload. Alternatively, after the AP determines that the radio frame to be received is the response frame of the trigger frame or the trigger information, the AP may select to detect or receive the common preamble, but the error in the detection or decoding of some or all of these common preambles does not affect the receipt of the subsequent data payload by the AP. That is, the AP ignores the error and continues to decode the data payload according to a preset parameter. The preset parameter is the parameter carried in the trigger frame or trigger information.

In addition, there are many ways for the AP to determine that the uplink multiuser transmission station actually make responses. For example, if in the SIFS after the trigger frame the traditional training sequence field (including L-STF, L-LTF) is captured and the energy is higher than a predefined threshold value, then it can be determined that the station makes response.

### Sixth Embodiment

The AP competes for resources to send at least one trigger frame (Trigger Frame), and requires STA1 to STA4 to send uplink radio frames using an uplink UL MU-MIMO scheme. In addition to indication of transmission parameters in the trigger frame, such as the uplink resources allocated to STA1 to STA4, the MCS, the number of streams, and the transmission duration, the trigger frame further indicates whether the stations for the uplink multi-user transmission use the DCM transmission mode. The DCM transmission mode refers to mapping the same information data onto a pair of subcarriers, that is, the two subcarriers carry the same content. This transmission mode can achieve diversity gain, and when the data of a certain subcarrier is interfered, another subcarrier alone can be used to perform decoding. Such transmission mode has good anti-interference ability. In this embodiment, it is assumed that the AP indicates using the DCM transmission mode. A common information field in the trigger frame may be used to indicate whether all stations participating in the uplink transmission use the DCM transmission mode, that is, the transmission modes of all stations are the same. Further, in the embodiment of the present disclosure, if the DCM technology is used, the transmission mode is called a DCM transmission mode; if the DCM technology is not used, the transmission mode is called a normal transmission mode.

STA1 to STA4 receive the trigger frame sent by the AP and find that they are scheduled to perform uplink multiuser transmission. Assuming that STA1 to STA4 determine that the transmission can be performed, STA1 to STA4 send uplink radio frames according to the AP-indicated transmission parameters on the resources indicated by the AP. The uplink radio frame includes a preamble and a data payload. The preamble includes a common preamble and a specific preamble based on each sending station. The specific preamble is mainly a high efficiency training field sent by the corresponding sending station, including a high efficiency short training field (HE-STF) and a high efficiency long training field (HE-LTF).

STA1 to STA4 send uplink radio frames according to the indication of the AP in the trigger frame. All stations send a common preamble, in which a legacy short training field (L-STF), a legacy long training field (L-LTF), a legacy signaling field (L-SIG), the repeated L-SIG, HE-SIG-A (If present, the common preamble also includes the repeated HE-SIG-A) are sent. Among them, the transmission mode field in the HE-SIG-A (and the repeated HE-SIG-A) is set to be the transmission mode configured by the AP, so that the values set by the AP for all station are the same. This can ensure that the transmitted HE-SIG-As are consistent. In the embodiment, the transmission mode is set as the DCM transmission mode. According to the AP's instructions, STA1~STA4 use the DCM transmission mode to transmit the data payload part when sending data payload.

### Seventh Embodiment

The AP competes for resources to send at least one trigger frame (Trigger Frame), and requires STA1 to STA4 to send uplink radio frames in an uplink UL MU-MIMO manner. In addition to indication of transmission parameters in the trigger frame, such as the uplink resources allocated to STA1 to STA4, the MCS, the number of streams, and the transmission duration, the trigger frame also indicates whether the uplink multi-user transmission uses the DCM transmission mode. Due to the capabilities or other factors of the stations, it is possible that some stations use the DCM mode and some other stations cannot use the DCM mode in one uplink multi-user transmission. In the embodiment, it is assumed that the AP indicates whether each uplink station uses the DCM transmission mode. Alternatively, whether the station participating in the uplink transmission uses the DCM transmission mode may be indicated in a separate information field for each station in the trigger frame. That is, the data payload transmission modes of multiple stations participating in the uplink transmission may be different. It is assumed that the STA configures that STA1 to STA2 use the DCM transmission mode and STA3 to STA4 do not use the DCM transmission mode.

STA1 to STA4 receive the trigger frame sent by the AP and find that they are scheduled to perform uplink multiuser transmission. Assuming that STA1 to STA4 determine that the transmission can be performed, STA1 to STA4 send uplink radio frames according to the AP-indicated transmission parameters on the resources indicated by the AP. The uplink radio frame includes two parts, a preamble and a data payload; the preamble includes a common preamble and a specific preamble based on each sending station.

STA1 to STA4 send uplink radio frames according to the indication of the AP in the trigger frame, and all stations send a common preamble. According to an exemplary embodiment, a legacy short training field (L-STF), a legacy long training field (L-LTF), a legacy signaling field (L-SIG), a repeated L-SIG, the HE-SIG-A (if present, the common preamble also includes the repeated HE-SIG-A) are sent. Although STA1 to STA2 use the DCM transmission mode, and STA3 to STA4 do not use the DCM transmission mode, but it is also necessary to ensure that the contents of the common preambles are completely consistent. Therefore, the possible methods are as follows:
In the HE-SIG-A of the uplink transmission radio frame, an information field indicating whether to use the DCM transmission mode is reserved, does not carry the indication, or the indication is set as a reserved field and is not used to indicate the DCM transmission mode.

Alternatively, in the HE-SIG-A of the uplink transmission radio frame, an information field indicating whether to use the DCM transmission mode is set as a specific predefined value, and all stations set the information field as the specific value.

In addition, how the AP configures whether the uplink multiple users use the DCM transmission mode may be one of the following:
Method 1: As described above, before each uplink multi-user transmission, the AP sends at least one trigger frame or trigger information to multiple uplink stations, and an information field in the trigger frame is used to explicitly indicate whether multiple uplink stations transmit data payloads using the DCM transmission mode.
Method 2: The feature of the transmission of the trigger frame itself is used to implicitly indicate whether transmissions of data of multiple uplink stations use the DCM transmission mode. For example, if the data payload in the radio frame where the trigger frame itself is located uses the DCM transmission mode, the transmissions of multiple uplink stations triggered by the trigger frame also use the DCM transmission mode.
Method 3: The AP indicates whether the uplink multi-user transmission uses the DCM in a transmitted unicast or multicast management frame. For example, the AP indicates whether the uplink multi-user transmission uses the DCM in an association response, a probe response or other unicast management frame which is sent to the stations. Or, the AP notifies the stations of whether to use the DCM transmission mode for the uplink multi-user transmission in a transmitted Beacon frame or other broadcast multicast frames. In this way, when the stations send the uplink radio frames upon trigger of the AP, the stations transmit the data payload according to the transmission mode set in the latest received unicast or multicast management frame.
Method 4: Whether the DCM transmission mode is used when the uplink multi-user transmission is conducted may be set from a protocol level.

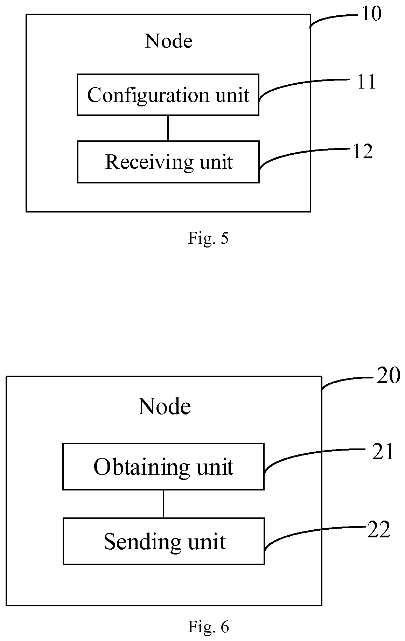

An embodiment of the present disclosure provides a node 10. The node 10 may be a main node. As shown in Fig. 5, the node 10 provided by the present embodiment may include a configuration unit 11 and a receiving unit 12.

The configuration unit 11 is configured to configure at least one transmission parameter for N secondary nodes sending radio frames in an uplink multi-user transmission, where N is a positive integer. The transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; wherein the transmission mode includes a normal transmission mode or a Dual Carrier Modulation (DCM) transmission mode.

The receiving unit 12 is configured to receive at least one radio frame which is sent from at least one of the N secondary nodes.

According to an exemplary embodiment, the configuration unit 11 is configured to: send at least one trigger frame or trigger information to the secondary nodes. The trigger frame or trigger information carries an information field which indicates the transmission parameter when the secondary nodes send the radio frames.

According to an exemplary embodiment, the configuration unit 11 is configured to: send at least one trigger frame or trigger information to the secondary nodes. A sending manner of the trigger frame or the trigger information impliedly indicates the transmission parameter when the secondary nodes send the radio frames.

According to an exemplary embodiment, the impliedly indicating the transmission parameter when the secondary nodes send the radio frames includes: configuring the transmission parameter when the secondary nodes send the radio frames by using a transmission parameter of a radio frame which the trigger frame or the trigger information resides in.

According to an exemplary embodiment, the configuration unit 11 is configured to: send a unicast or multicast management frame. The management frame carries an information field indicating the transmission parameter when the secondary nodes send the radio frames.

According to an exemplary embodiment, the configuration unit 11 is configured to: according to a configuration predefined by a protocol, set the transmission parameter when the secondary nodes send the radio frames.

According to an exemplary embodiment, repetition modes of preset signaling fields of the secondary nodes are configured as the same; each of the repetition modes of the present signaling fields refers to at least one of: whether the preset signaling field is sent repeatedly; an interleaving parameter when the preset signaling field is sent repeatedly, a code when the preset signaling field is sent repeatedly, and the number of repetitions of the preset signaling field.

According to an exemplary embodiment, transmission modes of the N secondary nodes are a mode in which indication information uniformly indicates the same mode; or the transmission modes of the N secondary nodes are indicated respectively with corresponding N pieces of indication information, these N pieces of indication information indicate the same or different modes.

According to an exemplary embodiment, the receiving unit 12 is configured to: if it is determined that a radio frame to be received is a response frame which is used for responding to at least one trigger frame or trigger information, skip detection or decoding of a part or whole of common preambles sent by the secondary nodes, and decode a data payload according to a preset parameter. The preset parameter is a parameter which is carried in the trigger frame or the trigger information.

According to an exemplary embodiment, the receiving unit 12 is configured to: if it is determined that a radio frame to be received is a response frame which is used for responding to at least one trigger frame or trigger information and there is an error in detection or decoding of a part or whole of common preambles sent by the secondary nodes, ignore the error and decoding a data payload according to a preset parameter. The preset parameter is a parameter which is carried in the trigger frame or the trigger information.

According to an exemplary embodiment, the common preamble sent from the secondary nodes includes: a legacy short training field (L-STF), a legacy long training field (L-LTF), a legacy signaling field (L-SIG), a repeated L-SIG, and the preset signaling field.

According to an exemplary embodiment, if the preset signaling field is sent repeatedly, the common preamble further includes the repeated preset signaling field.

According to an exemplary embodiment, the receiving unit 12 is configured to: detect preambles on all sub-channels, and if the preamble on at least one sub-channel exceeds a threshold value, start to receive data payloads sent from the secondary nodes. The one or more sub-channels may be a main channel or a secondary channel.

The device embodiments are used to implement the above method embodiments, and the operating procedure and principles of the units in the device embodiments can be found in the above descriptions regarding the method embodiments and repeated descriptions are omitted here.

In the embodiment, a node is provided and the node may be a main node. The main node configures at least one transmission parameter for N secondary nodes sending radio frames in an uplink multi-user transmission, where N is a positive integer. The transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; wherein the transmission mode includes a normal transmission mode or a Dual Carrier Modulation (DCM) transmission mode. Then the main node receives at least one radio frame which is sent from at least one of the N secondary nodes. In the technical solutions provided by embodiments of the present disclosure, the main node controls, by indication, the signaling field sent by the secondary nodes for an uplink transmission and the transmission parameter of other preambles, and this can ensure that the common preambles of individual secondary nodes for an uplink multi-user transmission are uniform, and thereby can ensure that the main node and listening nodes can correctly receive and interpret the common preambles. Further, if the main node determines the current transmission is an uplink multi-user transmission, if the detection or decoding of the preamble signaling is wrong, data receipt can still be conducted. Thus, the probability of success for uplink multi-user transmissions is increased and thus utilization efficiency of the networks is improved.

An embodiment of the present disclosure provides another node 20. The node 20 is a secondary node. As shown in Fig. 6, the node 20 in the embodiment may include an obtaining unit 21 and a sending unit 22.

The obtaining unit is configured to obtain at least one transmission parameter of a radio frame for an uplink multi-user transmission which is configured by a main node, wherein the transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; the transmission mode includes a normal transmission mode or a Dual Carrier Modulation (DCM) transmission mode.

The sending unit 22 is configured to send an uplink radio frame, wherein the radio frame uses the obtained transmission parameter.

According to an exemplary embodiment, the obtaining unit 21 is configured to determine the transmission parameter of the radio frame for the uplink multi-user transmission according to at least one of the following manners:
receiving at least one trigger frame or trigger information sent from the main node, and
determining the transmission parameter of the radio frame for the uplink multi-user according to information field carried in the trigger frame or trigger information which indicates the transmission parameter of the radio frame for the uplink multi-user transmission;
receiving at least one trigger frame or trigger information sent from the main node, and determining the transmission parameter of the radio frame for the uplink multi-user according to a transmission parameter of the radio frame which is used when the trigger frame or the trigger information is sent; and
receiving a unicast or multicast management frame sent from the main node, and determining the transmission parameter of the radio frame for the uplink multi-user according to an information field carried in the management frame which indicates the transmission parameter of the radio frame for the uplink multi-user transmission; and
determining the transmission parameter of the radio frame for the uplink multi-user according to a configuration predefined by a protocol.

According to an exemplary embodiment, the sending unit 22 is configured to: send a common preamble by using the phase rotation mode of the sub-channel of the common preamble and/or the cyclic shift diversity parameter of the space-time stream/transmission chain of the common preamble.

According to an exemplary embodiment, the sending unit 22 is configured to: send a data payload by using the transmission mode configured by the main node.

According to an exemplary embodiment, the node further includes: an indication unit configured to, according to the obtained repetition mode of the preset signaling field, indicate the repetition mode of the preset signaling field in the radio frame in a training sequence or a signaling field before the preset signaling field.

The device embodiments are used to implement the above method embodiments, and the operating procedure and principles of the units in the device embodiments can be found in the above descriptions regarding the method embodiments and repeated descriptions are omitted here.

The embodiment of the present disclosure provides a node and the node is a secondary node. The secondary node obtains at least one transmission parameter of a radio frame for an uplink multi-user transmission which is configured by a main node. The transmission parameter includes at least one of: a repetition mode of a preset signaling field, a phase rotation mode of a sub-channel of a common preamble, a cyclic shift diversity parameter of a space-time stream/transmission chain of a common preamble and a transmission mode; wherein the transmission mode includes a normal transmission mode or a Dual Carrier Modulation (DCM) transmission mode. Then, the secondary node sends an uplink radio frame, and the radio frame uses the obtained transmission parameter. Then the main node receives at least one radio frame which is sent from at least one of the N secondary nodes. In the technical solutions provided by embodiments of the present disclosure, the main node controls, by indication, the signaling field sent by the secondary nodes for an uplink transmission and the transmission parameter of other preambles, and this can ensure that the common preambles of individual secondary nodes for an uplink multi-user transmission are uniform, and thereby can ensure that the main node and listening nodes can correctly receive and interpret the common preambles. Further, if the main node determines the current transmission is an uplink multi-user transmission, if the detection or decoding of the preamble signaling is wrong, data receipt can still be conducted. Thus, the probability of success for uplink multi-user transmissions is increased and thus utilization efficiency of the networks is improved.

An embodiment of the present disclosure provides a computer readable storage medium having computer executable instructions stored therein. The computer executable instructions are executed to realize the data transmission method of the main node.

An embodiment of the present disclosure provides a computer readable storage medium having computer executable instructions stored therein. The computer executable instructions are executed to realize the data transmission method of the secondary node.

Those of ordinary skill in the art can understand that all or part of the steps in the above methods can be implemented by instructing related hardware (e.g., processor) by a program, and the program can be stored in a computer-readable storage medium, such as a read-only memory, a magnetic disk, or an optical disk. Alternatively, all or some of the steps of the above embodiments may also be implemented using one or more integrated circuits. Correspondingly, the modules/units in the above embodiments may be implemented in the form of hardware, for example, through integrated circuit(s) to realize their corresponding functions, or may be implemented in the form of software function modules, such as a program/instructions stored in a memory may be executed by a processor to achieve corresponding functions. The embodiments of the present disclosure are not limited to any specific combination of hardware and software.

Although the embodiments of the present disclosure are described above, the contents described herein are only for ease of understanding of the present disclosure and are not intended to limit the present disclosure.

## Claims

1. A data transmission method, executed by a first node in simultaneous communication with N second nodes and comprising:
configuring (100) at least one transmission parameter for the N second nodes sending radio frames in an uplink multi-user transmission,
wherein N is a positive integer and each radio frame comprises a common preamble and a data payload, and the transmission parameter comprises at least one of: a repetition mode of a preset signaling field, a phase rotation mode of one or more sub-channels of the common preamble, a cyclic shift diversity parameter of a respective transmission chain of the common preamble, and a transmission mode, and
wherein the transmission mode comprises a normal transmission mode or a Dual Carrier Modulation, DCM, transmission mode,
wherein the common preamble is a preamble that the first node receives from each of N second nodes simultaneously communicating with the first node and common preambles received by the first node from the N second nodes have same content;
sending at least one trigger frame or trigger information to the N second nodes, wherein an information field associated with the at least one transmission parameter is carried in the at least one trigger frame or trigger information; and
receiving (102) at least one radio frame which is sent from at least one of the N second nodes.

2. The method according to claim 1, wherein a sending manner of the trigger frame or the trigger information impliedly indicates the transmission parameter when the second nodes send the radio frames.

3. The method according to claim 2, wherein impliedly indicating the transmission parameter when the second nodes send the radio frames comprises:
configuring the transmission parameter when the second nodes send the radio frames by using a transmission parameter of a radio frame which the trigger frame or the trigger information resides in.

4. The method according to any one of claims 1 to 3, wherein transmission modes of the N second nodes are (i) a same mode indicated by indication information, or (ii) indicated respectively with corresponding N pieces of indication information, these N pieces of indication information indicating the same or different modes.

5. The method according to claim 1, wherein receiving at least one radio frame which is sent from at least one of the N second nodes, comprises:
receiving radio frames which are sent by the second nodes in parallel,
wherein receiving radio frames which are sent by the second nodes in parallel, comprises:
upon determining that a received radio frame is a response frame which is used for responding to at least one trigger frame or trigger information, skipping detection or decoding of a part or whole of common preambles sent by the second nodes, and decoding the data payload according to a preset parameter; wherein the preset parameter is the transmission parameter which is carried in the trigger frame or the trigger information, or
upon determining that a received radio frame is a response frame which is used for responding to at least one trigger frame or trigger information and there is an error in detection or decoding of a part or whole of common preambles sent by the second nodes, ignoring the error and decoding the data payload according to a preset parameter,
wherein the preset parameter is a parameter which is carried in the trigger frame or the trigger information.

6. The method according to claim 1, wherein the common preamble comprises: a legacy short training field, L-STF, a legacy long training field, L-LTF, a legacy signaling field, L-SIG, a repeated L-SIG, and a preset signaling field.

7. The method according to any one of claims 1 to 6, wherein the preset signaling field is a high efficiency signaling A, HE-SIG-A, and wherein the repetition mode of a preset signaling field includes at least one of the following information: information relating to whether HE-SIG-A is sent repeatedly; an interleaving parameter when HE-SIG-A is sent repeatedly, a code when the HE-SIG-A is sent repeatedly, and the number of repetitions of the HE-SIG-A.

8. The method according to any one of claims 1 to 7, wherein the information field indicates the transmission parameter of the radio frame for the uplink multi-user transmission.

9. A first node, configured to simultaneously communicate with N second nodes and comprising:
a configuration unit (11) configured to configure a transmission parameter for the N second nodes sending radio frames in an uplink multi-user transmission, wherein the configuration unit (11) is configured to:
send at least one trigger frame or trigger information to the N second nodes, wherein an information field associated with the transmission parameter is carried in the at least one trigger frame or trigger information,
wherein N is a positive integer and each radio frame comprises a common preamble and a data payload, and the transmission parameter comprises at least one of a phase rotation mode of one or more subchannels of the common preamble, a cyclic shift diversity parameter of a respective transmission chain of the common preamble and a transmission mode, and
wherein the common preamble is a preamble that the first node receives from each of N second nodes simultaneously communicating with the first node and common preambles received by the first node from the N second nodes have same content,
wherein the transmission mode comprises a normal transmission mode or a Dual Carrier Modulation, DCM, transmission mode; and
a receiving unit (12) configured to receive at least one radio frame which is sent from at least one of the N second nodes.

10. The first node according to claim 9, wherein a sending manner of the trigger frame or the trigger information impliedly indicates the transmission parameter when the second nodes send the radio frames,
wherein the impliedly indicating the transmission parameter when the second nodes send the radio frames comprises:
configuring the transmission parameter when the second nodes send the radio frames by using a transmission parameter of a radio frame which the trigger frame or the trigger information resides in.

11. The first node according to claim 9 or 10, wherein transmission modes of the N second nodes are (i) a same mode indicated by indication information, or (ii) indicated respectively with corresponding N pieces of indication information, these N pieces of indication information indicate the same or different modes.

## Patentansprüche

1. Datenübertragungsverfahren, das von einem ersten Knoten in gleichzeitiger Kommunikation mit N zweiten Knoten ausgeführt wird und das aufweist:
Konfigurieren (100) mindestens eines Übertragungsparameters für die N zweiten Knoten, die Funkrahmen in einer Uplink-Mehrbenutzer-Übertragung senden,
wobei N eine positive ganze Zahl ist und jeder Funkrahmen eine gemeinsame Präambel und Nutzdaten aufweist und der Übertragungsparameter mindestens eines aufweist von:
einem Wiederholungsmodus eines voreingestellten Signalisierungsfeldes, einem Phasendrehungsmodus von einem oder mehreren Unterkanälen der gemeinsamen Präambel, einem zyklischen Verschiebungsdiversitätsparameter einer jeweiligen Übertragungskette der gemeinsamen Präambel und einem Übertragungsmodus, und
wobei der Übertragungsmodus einen normalen Übertragungsmodus oder einen Dual Carrier Modulation, DCM, Übertragungsmodus aufweist,
wobei die gemeinsame Präambel eine Präambel ist, die der erste Knoten von jedem von N zweiten Knoten empfängt, die gleichzeitig mit dem ersten Knoten kommunizieren, und gemeinsame Präambeln, die vom ersten Knoten von den N zweiten Knoten empfangen werden, denselben Inhalt haben;
Senden mindestens eines Triggerrahmens oder von Triggerinformationen an die N zweiten Knoten, wobei ein mit dem mindestens einen Übertragungsparameter verbundenes Informationsfeld in dem mindestens einen Triggerrahmen oder den Triggerinformationen übertragen wird; und
Empfangen (102) mindestens eines Funkrahmens, der von mindestens einem der N zweiten Knoten gesendet wird.

2. Verfahren nach Anspruch 1, wobei eine Sendeart des Triggerrahmens oder der Triggerinformationen implizit den Übertragungsparameter anzeigt, wenn die zweiten Knoten die Funkrahmen senden.

3. Verfahren nach Anspruch 2, wobei das implizite Anzeigen des Übertragungsparameters, wenn die zweiten Knoten die Funkrahmen senden, aufweist:
Konfigurieren des Übertragungsparameters, wenn die zweiten Knoten die Funkrahmen senden, unter Verwendung eines Übertragungsparameters eines Funkrahmens, in dem sich der Triggerrahmen oder die Triggerinformationen befinden.

4. Verfahren nach einem der Ansprüche 1 bis 3, wobei die Übertragungsmodi der N zweiten Knoten (i) ein und derselbe Modus sind, der durch Anzeigeinformationen angezeigt wird, oder (ii) jeweils mit entsprechenden N Teilen von Anzeigeinformationen angezeigt werden, wobei diese N Teile von Anzeigeinformationen denselben oder unterschiedliche Modi anzeigen.

5. Verfahren nach Anspruch 1, wobei das Empfangen mindestens eines Funkrahmens, der von mindestens einem der N zweiten Knoten gesendet wird, aufweist:
Empfangen von Funkrahmen, die von den zweiten Knoten parallel gesendet werden,
wobei das Empfangen von Funkrahmen, die von den zweiten Knoten parallel gesendet werden, aufweist:
wenn festgestellt wird, dass ein empfangener Funkrahmen ein Antwortrahmen ist, der zum Antworten auf mindestens einen Triggerrahmen oder Triggerinformationen verwendet wird, Überspringen der Erkennung oder Dekodierung eines Teils oder der Gesamtheit von gemeinsamen Präambeln, die von den zweiten Knoten gesendet werden, und Dekodieren der Nutzdaten gemäß einem voreingestellten Parameter; wobei der voreingestellte Parameter der Übertragungsparameter ist, der im Triggerrahmen oder den Triggerinformationen übertragen wird, oder
wenn festgestellt wird, dass ein empfangener Funkrahmen ein Antwortrahmen ist, der zum Antworten auf mindestens einen Triggerrahmen oder Triggerinformationen verwendet wird, und dass ein Fehler bei der Erkennung oder Dekodierung eines Teils oder der Gesamtheit der von den zweiten Knoten gesendeten gemeinsamen Präambeln vorliegt, Ignorieren des Fehlers und Dekodieren der Nutzdaten gemäß einem voreingestellten Parameter,
wobei der voreingestellte Parameter ein Parameter ist, der im Triggerrahmen oder den Triggerinformationen enthalten ist.

6. Verfahren nach Anspruch 1, wobei die gemeinsame Präambel aufweist: ein veraltetes Kurztrainingsfeld, L-STF, ein veraltetes Langtrainingsfeld, L-LTF, ein veraltetes Signalisierungsfeld, L-SIG, ein wiederholtes L-SIG, und ein voreingestelltes Signalisierungsfeld.

7. Verfahren nach einem der Ansprüche 1 bis 6, wobei das voreingestellte Signalisierungsfeld ein hocheffizientes Signalisierungsfeld A, HE-SIG-A, ist und wobei der Wiederholungsmodus eines voreingestellten Signalisierungsfeldes mindestens eine der folgenden Informationen enthält: Informationen darüber, ob HE-SIG-A wiederholt gesendet wird; einen Verschachtelungsparameter, wenn HE-SIG-A wiederholt gesendet wird, einen Code, wenn HE-SIG-A wiederholt gesendet wird, und die Anzahl der Wiederholungen von HE-SIG-A.

8. Verfahren nach einem der Ansprüche 1 bis 7, wobei das Informationsfeld den Übertragungsparameter des Funkrahmens für die Uplink-Mehrbenutzer-Übertragung angibt.

9. Erster Knoten, der konfiguriert ist, gleichzeitig mit N zweiten Knoten zu kommunizieren, und der aufweist:
eine Konfigurationseinheit (11), die konfiguriert ist, einen Übertragungsparameter für die N zweiten Knoten zu konfigurieren, die Funkrahmen in einer Uplink-Mehrbenutzer-Übertragung senden, wobei die Konfigurationseinheit (11) konfiguriert ist:
mindestens einen Triggerrahmen oder Triggerinformationen an die N zweiten Knoten zu senden, wobei ein Informationsfeld, das mit dem Übertragungsparameter verbunden ist, in dem mindestens einen Triggerrahmen oder den Triggerinformationen enthalten ist,
wobei N eine positive ganze Zahl ist und jeder Funkrahmen eine gemeinsame Präambel und Nutzdaten aufweist, und der Übertragungsparameter mindestens einen eines Phasendrehungsmodus eines oder mehrerer Unterkanäle der gemeinsamen Präambel, eines zyklischen Verschiebungsdiversitätsparameters einer jeweiligen Übertragungskette der gemeinsamen Präambel und eines Übertragungsmodus aufweist, und
wobei die gemeinsame Präambel eine Präambel ist, die der erste Knoten von jedem von N zweiten Knoten empfängt, die gleichzeitig mit dem ersten Knoten kommunizieren, und gemeinsame Präambeln, die von dem ersten Knoten von den N zweiten Knoten empfangen werden, denselben Inhalt haben,
wobei der Übertragungsmodus einen normalen Übertragungsmodus oder einen Dual Carrier Modulation, DCM, Übertragungsmodus aufweist; und
eine Empfangseinheit (12), die konfiguriert ist, mindestens einen Funkrahmen zu empfangen, der von mindestens einem der N zweiten Knoten gesendet wird.

10. Erster Knoten nach Anspruch 9, wobei eine Sendeart des Triggerrahmens oder der Triggerinformationen implizit den Übertragungsparameter anzeigt, wenn die zweiten Knoten die Funkrahmen senden,
wobei das implizite Anzeigen des Übertragungsparameters, wenn die zweiten Knoten die Funkrahmen senden, aufweist:
Konfigurieren des Übertragungsparameters, wenn die zweiten Knoten die Funkrahmen senden, unter Verwendung eines Übertragungsparameters eines Funkrahmens, in dem sich der Triggerrahmen oder die Triggerinformationen befinden.

11. Erster Knoten nach Anspruch 9 oder 10, wobei die Übertragungsmodi der N zweiten Knoten (i) ein und derselbe Modus sind, der durch Anzeigeinformationen angezeigt wird, oder (ii) jeweils mit entsprechenden N Teilen von Anzeigeinformationen angezeigt werden, wobei diese N Teile von Anzeigeinformationen denselben oder unterschiedliche Modi anzeigen.

## Revendications

1. Procédé de transmission de données, exécuté par un premier noeud en communication simultanée avec N seconds noeuds et comprenant :
la configuration (100) d'au moins un paramètre de transmission pour les N seconds noeuds envoyant des trames radio dans une transmission multi-utilisateur en liaison montante,
dans lequel N est un nombre entier positif et chaque trame radio comprend un préambule commun et une charge utile de données, et le paramètre de transmission comprend au moins l'un des éléments suivants : un mode de répétition d'un champ de signalisation prédéfini, un mode de rotation de phase d'un ou de plusieurs sous-canaux du préambule commun, un paramètre de diversité à décalage cyclique d'une chaîne de transmission respective du préambule commun, et un mode de transmission, et
dans lequel le mode de transmission comprend un mode de transmission normal ou un mode de transmission de modulation à porteuses duales (Dual Carrier Modulation, DCM),
dans lequel le préambule commun est un préambule que le premier noeud reçoit de chacun des N seconds noeuds communiquant simultanément avec le premier noeud et les préambules communs reçus par le premier noeud des N seconds noeuds ont le même contenu ;
l'envoi d'au moins une trame de déclenchement ou information de déclenchement aux N seconds noeuds, un champ d'information associé à l'au moins un paramètre de transmission étant contenu dans l'au moins une trame de déclenchement ou information de déclenchement ; et
la réception (102) d'au moins une trame radio envoyée par au moins un des N seconds noeuds.

2. Procédé selon la revendication 1, dans lequel un mode d'envoi de la trame de déclenchement ou de l'information de déclenchement indique implicitement le paramètre de transmission lorsque les seconds noeuds envoient les trames radio.

3. Procédé selon la revendication 2, dans lequel l'indication implicite du paramètre de transmission lorsque les seconds noeuds envoient les trames radio comprend :
la configuration du paramètre de transmission lorsque les seconds noeuds envoient les trames radio en utilisant un paramètre de transmission d'une trame radio dans laquelle réside la trame de déclenchement ou l'information de déclenchement.

4. Procédé selon l'une quelconque des revendications 1 à 3, dans lequel les modes de transmission des N seconds noeuds sont (i) un même mode indiqué par des informations d'indication, ou (ii) indiqués respectivement avec N informations d'indication correspondantes, ces N informations d'indication indiquant le même mode ou des modes différents.

5. Procédé selon la revendication 1, dans lequel la réception d'au moins une trame radio qui est envoyée par au moins un des N seconds noeuds, comprend :
la réception de trames radio envoyées par les seconds noeuds en parallèle,
dans lequel la réception de trames radio envoyées par les seconds noeuds en parallèle comprend : lors de la détermination qu'une trame radio reçue est une trame de réponse utilisée pour répondre à au moins une trame de déclenchement ou une information de déclenchement, l'omission de la détection ou du décodage d'une partie ou de la totalité des préambules communs envoyés par les seconds noeuds, et le décodage de la charge utile de données en fonction d'un paramètre prédéfini ; le paramètre prédéfini étant le paramètre de transmission transmis dans la trame de déclenchement ou l'information de déclenchement, ou
lors de la détermination qu'une trame radio reçue est une trame de réponse utilisée pour répondre à au moins une trame de déclenchement ou une information de déclenchement et qu'il y a une erreur dans la détection ou le décodage d'une partie ou de la totalité des préambules communs envoyés par les seconds noeuds, le fait d'ignorer l'erreur et le décodage de la charge utile de données conformément à un paramètre prédéfini,
le paramètre prédéfini étant un paramètre figurant dans la trame de déclenchement ou l'information de déclenchement.

6. Procédé selon la revendication 1, dans lequel le préambule commun comprend : un champ d'apprentissage court hérité, L-STF, un champ d'apprentissage long hérité, L-LTF, un champ de signal hérité, L-SIG, un L-SIG répété, et un champ de signal prédéfini.

7. Procédé selon l'une des revendications 1 à 6, dans lequel le champ de signal prédéfini est un signal à haut rendement A, HE-SIG-A, et dans lequel le mode de répétition d'un champ de signal prédéfini comprend au moins l'une des informations suivantes : une information indiquant si le signal HE-SIG-A est envoyé de manière répétée ; un paramètre d'entrelacement lorsque HE-SIG-A est envoyé de manière répétée, un code lorsque HE-SIG-A est envoyé de manière répétée, et le nombre de répétitions de HE-SIG-A.

8. Procédé selon l'une quelconque des revendications 1 à 7, dans lequel le champ d'information indique le paramètre de transmission de la trame radio pour la transmission multi-utilisateur en liaison montante.

9. Un premier noeud, configuré pour communiquer simultanément avec N seconds noeuds et comprenant :
une unité de configuration (11) configurée pour configurer un paramètre de transmission pour les N seconds noeuds envoyant des trames radio dans une transmission multi-utilisateur en liaison montante, l'unité de configuration (11) étant configurée pour :
envoyer au moins une trame de déclenchement ou information de déclenchement aux N seconds noeuds, un champ d'information associé au paramètre de transmission étant transporté dans l'au moins une trame de déclenchement ou information de déclenchement,
dans lequel N est un nombre entier positif et chaque trame radio comprend un préambule commun et une charge utile de données, et le paramètre de transmission comprend au moins l'un des éléments suivants : un mode de rotation de phase d'un ou de plusieurs sous-canaux du préambule commun, un paramètre de diversité à décalage cyclique d'une chaîne de transmission respective du préambule commun et un mode de transmission, et
dans lequel le préambule commun est un préambule que le premier noeud reçoit de chacun des N seconds noeuds communiquant simultanément avec le premier noeud et les préambules communs reçus par le premier noeud des N seconds noeuds ont le même contenu,
dans lequel le mode de transmission comprend un mode de transmission normal ou un mode de transmission de modulation à porteuses duales (DCM) ; et
une unité de réception (12) configurée pour recevoir au moins une trame radio envoyée par au moins un des N seconds noeuds.

10. Premier noeud selon la revendication 9, dans lequel un mode d'envoi de la trame de déclenchement ou de l'informations de déclenchement indique implicitement le paramètre de transmission lorsque les seconds noeuds envoient les trames radio,
dans lequel l'indication implicite du paramètre de transmission lorsque les seconds noeuds envoient les trames radio comprend :
la configuration du paramètre de transmission lorsque les seconds noeuds envoient les trames radio en utilisant un paramètre de transmission d'une trame radio dans laquelle réside la trame de déclenchement ou l'information de déclenchement.

11. Premier noeud selon la revendication 9 ou 10, dans lequel les modes de transmission des N seconds noeuds sont (i) un même mode indiqué par des informations d'indication, ou (ii) indiqués respectivement avec N informations d'indication correspondantes, ces N informations d'indication indiquant le même mode ou des modes différents.
